# EUROPÄISCHE PATENTSCHRIFT

(11) **EP 0 548 439 B1**
(45) Veröffentlichungstag und Bekanntmachung des Hinweises auf die Patenterteilung: **27.09.1995**
(21) Anmeldenummer: 91810988.5
(22) Anmeldetag: 18.12.1991
(51) Int. Cl.: G01F 1/60

(54) **Schaltungsanordnung zum Betrieb mehrerer magnetisch-induktiver Durchflussaufnehmer an einer einzigen Auswerteelektronik**
Circuit for operating several electromagnetic flow sensors with a single utilizing circuit
Circuit pour connecter plusieurs débitmètres électromagnétiques à une seule unité de traitement électronique

(43) Veröffentlichungstag der Anmeldung: 30.06.1993
(73) Patentinhaber: Endress + Hauser Flowtec AG, CH-4153 Reinach BL 1 (CH)
(72) Erfinder: Brobeil, Wolfgang, Dipl.-Ing., W-7851 Fischingen (DE)
(74) Vertreter: Morstadt, Volker, Dipl.-Ing.

(56) Entgegenhaltungen:
- EP-A- 0 432 101
- PATENT ABSTRACTS OF JAPAN vol. 7, no. 216 (P-225)(1361) 24. September 1983 & JP-A-58 109 813

## Beschreibung

Die Erfindung betrifft eine Durchflußmesser-Anordnung mit mehreren magnetisch-induktiven Durchflußaufnehmern und insbesondere die Ausgestaltung einer Schaltungsanordnung zum Betrieb mehrerer magnetisch-induktiver Durchflußaufnehmer an einer einzigen Auswerteelektronik.

In der EP-A 432 101 ist eine Schaltungsanordnung zur Spannungs-versorgung von mehreren Winkelpositionssensoren und zur Durch-schaltung der von ihnen abgegebenen Meßwerte an eine Anzeige beschrieben, die hierzu als wesentlichen Bestandteil einen Analogmultiplexer enthält, der bei entsprechender Adressierung einerseits eine sinus- oder impulsförmige Wechselspannung zum anzuwählenden Winkelpositionssensor und andererseits dessen Ausgangssignal zu einer Auswerteelektronik durchschaltet.

Bedingt durch die spezielle Art dieser Sensoren sind bei der beschriebenen Schaltungsanordnung pro Sensor zwei Versorgungs- und vier Meßsignalleitungen erforderlich, so daß der Analogmultiplexer pro Sensor einen Sechsfachpfad zum Durchschalten aufweist.

Mit den vorbeschriebenen Winkelpositionssensoren sind magnetisch-induktive Durchflußaufnehmer jedoch allenfalls insofern vergleichbar, als daß sie ebenfalls mindestens sechs Zuleitungen haben, wovon zwei allerdings der Gleichspannungsversorgung, nur zwei der Meßwert- und zwei der Spulenstromdurchschaltung dienen. Somit ist die vorbeschriebene Schaltungsanordnung bei magnetischinduktiven Durchflußaufnehmern nicht anwendbar.

Aus dem englischen Abstract zur JP-A 58 - 109 813 ist bereits eine Durchflußmesser-Anordnung
- mit zwei magnetisch-induktiven Durchflußaufnehmern bekannt, deren jeder
   -- ein von einem zu messenden, elektrisch leitenden Fluid durchströmtes Meßrohr,
   -- eine Spulenanordnung zur Erzeugung eines das Meßrohr diametral und senkrecht zur Längsachse des Meßrohrs durchsetzenden Magnetfelds, wenn darin ein Spulenstrom fließt,
   -- zwei diametral in der Wand des Meßrohres angeordnete Meßelektroden, deren Verbindungslinie senkrecht zur Richtung des Magnetfelds ist und die der Abnahme der vom Magnetfeld induzierten Potentiale dienen, und
   -- eine am Meßrohr angeschlossene Schaltungsnullpunkt-Leitung umfaßt,
- mit einer einzigen Auswerteelektronik, die
   -- für jedes der beiden Meßrohre eine eigene, mit der jeweiligen Schaltungsnullpunkt-Leitung fest verbundene Verarbeitungseinheit für die Potentiale, und
   -- eine Generatorschaltung zur Erzeugung des Spulenstroms enthält, und
- mit einer Umschaltanordnung zum zeitlich aufeinander folgenden Einzelanschluß eines jeden der beiden Durchflußaufnehmer, die je Durchflußaufnehmer zwei Doppel-Schaltpfade umfaßt, über die der Ausgang der jeweiligen verarbeitungseinheit bzw. der Spulenstrom durchgeschaltet werden.

Diese Durchflußmesser-Anordnung ist allenfalls für Einfach-Ausführungen von Durchflußaufnehmern verwendbar, nicht jedoch für hochgenaue und kalibrierte Durchflußaufnehmer, also für solche, bei denen in einer werkseitigen Meßreihe der Kalibrierfaktor und der Nullpunktversatz, die beide herstellungsbedingt von Durchflußaufnehmer zu Durchflußaufnehmer schwanken, ermittelt und z.B. in einem EPROM gespeichert sind.

Eine Aufgabe der in den vier unabhängigen Ansprüchen und den beiden abhängigen Ansprüchen definierten Erfindung besteht daher darin, eine magnetisch-induktive Durchflußmesser-Anordnung mit einer Schaltungsanordnung zum Betrieb mehrerer kalibierter magnetisch-induktiver Durchflußaufnehmer an einer einzigen Auswerteelektronik anzugeben.

Nach einer Weiterbildung jeder dieser vier Varianten der Erfindung enthält der Analogmultiplexer soviele Zusatzschaltpfade je Durchflußaufnehmer, wie Zusatzelektroden, die in der Wand des jeweiligen Durchflußaufnehmers angeordnet sind, je Durchflußaufnehmer vorgesehen sind, die als Fluid-Überwachungselektroden dienen, welche(r) Zusatzschaltpfad(e) die Fluid-Überwachungselektrode(n) des gerade mit der Auswerteelektronik zu verbindenden Durchflußaufnehmers durchschalten.

Nach einer anderen Weiterbildung jeder der zweiten bis vierten Variante der Erfindung enthält der Analogmultiplexer je Durchflußaufnehmer einen Zusatzschaltpfad, über den ein von der Verarbeitungseinheit erzeugtes Fluid-Überwachungssignal durchgeschaltet wird, das die Verarbeitungseinheit aus einem ihr von mindestens einer als Fluid-Überwachungselektrode dienenden Zusatzelektrode zugeführten Signal erzeugt, die in der Wand des jeweiligen Durchflußaufnehmers angeordnet ist.

Die Erfindung wird nun anhand von Ausführungsbeispielen einer jeden der vier Varianten unter Bezugnahme auf die Figuren der Zeichnung näher erläutert, in der gleiche Teile mit denselben Bezugszeichen versehen sind.
- Fig. 1: zeigt schematisch das Blockschaltbild der ersten Variante,
- Fig. 2: zeigt schematisch das Blockschaltbild der zweiten Variante,
- Fig. 3: zeigt schematisch das Blockschaltbild der dritten Variante,
- Fig. 4: zeigt schematisch das Blockschaltbild der vierten Variante,
- Fig. 5: zeigt schematisch das Blockschaltbild einer bei allen vier Varianten möglichen Weiterbildung, und
- Fig. 6: zeigt schematisch das Blockschaltbild einer bei der zweiten bis vierten Variante möglichen anderen Weiterbildung.

Die in den Figuren verwendeten zweiziffrigen Bezugszeichen (mit oder ohne den die Anzahl n der vorgesehenen Durchflußaufnehmer bezeichnenden Index) sind nach folgendem System zugeordnet worden: Die Endziffern O, 5 bezeichnen Teilschaltungen, die allen Varianten und Weiterbildungen gemeinsam sind; dagegen bezeichnen die Endziffern 1 bis 4 und 6 bis 9 Teilschaltungen, die von Variante zu Variante bzw. von Weiterbildung zu Weiterbildung in ihrem konkreten Aufbau voneinander verschieden sein können, obwohl sie bei allen Varinten mit demselben technischen Begriff bezeichnet sind. Dabei bezeichnen die Endziffern 1, 6 (= 1 + 5) Teilschaltungen der ersten Variante, die Endziffern 2, 7 Teilschaltungen der zweiten Varinte, die Endziffern 3, 8 Teilschaltungen der dritten Variante und die Endziffern 4, 9 schließlich Teilschaltungen der vierten Variante.

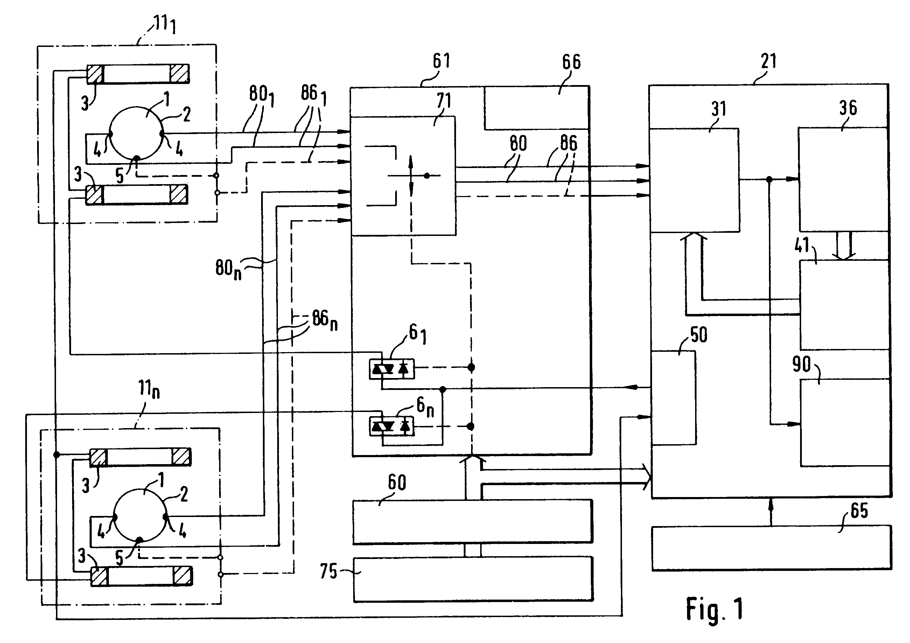

In den Fig. 1 bis 6 sind die für den mechanischen Aufbau eines magnetisch-induktiven Durchflußaufnehmers charakteristischen Teile mit den Bezugszeichen 1 bis 5 und 7 versehen. Ein solcher Durchflußaufnehmer ist bekanntlich zur Volumendurchflußmessung eines elektrisch leitfähigen Fluids 1 bestimmt, das in einem nichtferromagnetischen, gegen das Fluid elektrisch isolierten Meßrohr 2 strömt. Solche Meßrohre bestehen z. B. aus einem Keramikrohr oder aus einem Metallrohr, das innen mit einem geeigneten Kunststoff oder Gummi beschichtet ist.

Eine Spulenanordnung 3 erzeugt ein das Meßrohr 2 diametral und senkrecht zur Längsachse des Meßrohrs 2 durchsetzendes Magnetfeld, wenn darin ein Spulenstrom fließt. Dies kann sowohl ein Wechselstrom als auch ein pulsierender Gleichstrom sein, dessen Richtung periodisch umgekehrt wird, um Polarisationseffekte an den Meßelektroden zu minimieren.

Zwei diametral in oder an der Wand des Meßrohres 2 angeordnete Elektroden dienen als die eben erwähnten Meßelektroden 4, deren Verbindungslinie senkrecht zur Richtung des Magnetfelds ist, und ermöglichen die Abnahme der vom Magnetfeld aufgrund des Faraday'schen Induktionsgesetzes induzierten Potentiale. Die Meßelektroden 4 können entweder das Fluid berühren und leiten somit galvanisch die Potentiale ab, oder sie können vom Fluid isoliert in der Wand des Meßrohres angeordnet sein, so daß die Potentiale berührungslos und somit rein kapazitiv abgenommen werden.

Es können auch noch weitere in der Wand des Meßrohres 2 angeordnete Elektroden vorgesehen sein, wie z.B. eine in den Figuren gezeigte galvanische Schaltungsnullpunkt-Elektrode 5, die der Nullung des Fluids 1 dient, oder eine unten näher erläuterte galvanische oder kapazitive Fluid-Überwachungselektrode 7, mit der z.B., wenn sie im Scheitel des Meßrohres 2 angeordnet ist, ermittelt werden kann, ob es vollständig gefüllt ist oder ob das Fluid Gasblasen enthält.

Bei der anhand der Fig. 1 nun zu erläuternden ersten Variante enthalten die Durchflußaufnehmer 11₁, 11ₙ die eben erwähnten Teile. Somit ist es nicht erforderlich, diese Durchflußaufnehmer, außer daß dem gerade messenden Durchflußaufnehmer der Spulenstrom zuzuführen ist, mit einer Betriebsspannung zu speisen.

Die Durchflußaufnehmer 11₁, 11ₙ sind an eine einzige, allen gemeinsame Auswerteelektronik 21 angeschlossen, und zwar über eine Umschaltanordnung 61, mittels welcher der gerade messende, also aktive, Durchflußaufnehmer mit der Auswerteelektronik 21 sowohl hinsichtlich des der Spulenanordnung 3 zuzuführenden Spulenstroms als auch der Abnahme der Potentiale an den Meßelektroden 4 verbunden wird.

Der aktive Durchflußaufnehmer wird mit einer Ablaufsteuerung 60 und einer dieser zugeordneten Benutzeroberfläche 75 ausgewählt. Diese kann z.B. eine Eingabetastatur haben, mittels der der aktiv zu schaltende Durchflußaufnehmer über seine Nummer angewählt werden kann. Es kann andererseits auch ein automatischer Fortschaltbetrieb vorgesehen werden, durch den die Durchflußaufnehmer 11₁, 11ₙ nacheinander in wählbaren Zeitabständen aktiviert werden.

Die Umschaltanordnung 61 enthält für jeden Durchflußaufnehmer 11₁, 11ₙ einen optisch angesteuerten, im Stromnulldurchgang selbstlöschenden Thyristor 6₁, 6ₙ einen sogenannten Optotriac, dessen Hauptstrompfad in einer der zugehörigen Spulenleitungen angeordnet ist. Hierzu liegen diese Hauptstrompfade mit ihrem einen Ende gemeinsam am Ausgang einer Generatorschaltung 50 für den Spulenstrom, die in der noch zu erläuternden Auswerteelektronik 21 angeordnet ist. Das jeweils andere Ende der Optotriacs 6₁, 6ₙ ist mit dem einen Ende der jeweiligen Spulenanordnung 3 verbunden, deren anderes Ende gemeinsam zum Eingang der Generatorschaltung 50 geführt ist.

Das Leitendsteuern der Optotriacs 6₁, 6ₙ erfolgt mittels eines entsprechenden Signals an deren jeweilige lichtemittierende Diode, das aus der Ablaufsteuerung 60 stammt. Dieser Sachverhalt ist in den Figuren durch die zu den Optotriacs 6₁, 6ₙ führenden gestrichelten Linien veranschaulicht.

Die Umschaltanordnung 61 enthält ferner einen Analogmultiplexer 71 mit entweder sovielen, also n, Doppel-Schaltpfaden 80₁-80, 80ₙ-80 oder ebensovielen Tri-pel-Schaltpfaden 86₁-86, 86ₙ-86, wie Durchflußaufnehmer vorgesehen sind. Die Doppel-Schaltpfade 80₁-80, 80ₙ-80 bzw. die Tripel-Schaltpfade 86₁-86, 86ₙ-86 schalten die jeweils beiden Meßelektroden 4 bzw. die jeweils beiden Meßelektroden 4 und die jeweilige Schaltungsnullpunkt-Leitung der Durchflußaufnehmer zur Auswerteelektronik 21 durch. Über den gemeinsamen Schaltpfadteil 80 ist der Analogmultiplexer 71 mit einer Verarbeitungseinheit 31 verbunden, während der jeweilige Durchflußaufnehmer über den Schaltpfadteil 80₁, 80ₙ bzw. 86₁, 86ₙ an der Umschaltanordnung 61 liegt.

Die Auswahl des Schaltpfads erfolgt wiederum mittels der Ablaufsteuerung 60, welche Wirkverbindung in den Figuren ebenfalls durch eine gestrichelte Linie veranschaulicht ist.

Die Umschaltanordnung 61 enthält schließlich noch eine Spannungsversorgung 66, mit der in üblicher Weise die zu deren Betrieb erforderlichen Spannungen und Ströme erzeugt werden.

Die Auswerteelektronik 21 enthält eine Verarbeitungseinheit 31 für die durchgeschalteten Potentiale der Meßelektroden 4. Hierfür sind übliche und gängige Verstärker-, Abtast/Halte- und Kompensationsschaltungen geeignet, wie sie z.B. in den eigenen US-Patenten 42 10 022, 44 22 337, 43 82 387 und 47 04 908 beschrieben sind.

Die Auswerteelektronik 21 enthält ferner eine der Verarbeitungseinheit 31 nachgeschaltete digitale Kalibrier- und Nullpunktabgleichanordnung 36, die digitale Kalibrier-Daten und digitale Nullpunktversatz-Daten erzeugt. Hierzu enthält sie eingangsseitig einen Analog/Digital-Wandler. Als Kalibrier-Daten kann z.B. der Kalibrierfaktor in digitaler Form dienen, der beim Kalibrieren der Durchflußaufnehmer individuell ausgemessen und u.a. z.B. auf dessen Typenschild festgehalten wird. Als Nullpunktversatz-Daten kann in vergleichbarer Weise der beim individuellen Ausmessen ebenfalls festgestellte und jeden Durchflußaufnehmer individuell charakterisierende Nullpunkt-Offsetwert in digitaler Form dienen.

Die Auswerteelektronik 21 enthält ferner einen elektronischen Speicher 41 für die digitalen Kalibrier-Daten und die digitalen Nullpunktversatz-Daten aller Durchflußaufnehmer 11₁, 11ₙ und die bereits erwähnte Generatorschaltung 50 zur Erzeugung des Spulenstroms. Hierfür sind ebenfalls übliche und gängige Schaltungen geeignet, wie sie z. B. im eigenen US-Patent 44 10 926 beschrieben sind.

Die Auswerteelektronik 21 enthält schließlich auch ein Display 90, mit dem mindestens der Meßwert des Volumendurchflusses und weitere, daraus abgeleitete Angaben einerseits angezeigt und/oder andererseits auch in einer geeigneten elektrischen Form, z.B. als Strom zwischen 4 mA und 20 mA, als Frequenz oder Impulszahl eines Wechselsignals oder als Digitalsignal, ausgegeben werden.

Auch kann in der Auswerteelektronik 21 für jeden Durchflußaufnehmer ein Summierzähler vorgesehen werden, der einen gerade aufgenommenen Meßwert eines aktiven Durchflußaufnehmers in denjenigen Zeitabschnitten, in denen die restlichen Durchflußaufnehmer messen, unter Berücksichtigung der Gesamtmeßzeit dieser restlichen Durchflußaufnehmer derart aufsummiert, daß er im Sinne eines sogenannten Totalisators ein Signal über eine kumulierte durchgeflossene Menge an Fluid abgibt und auf dem Display 90 anzeigt.

Schließlich ist in Fig. 1 der Vollständigkeit halber noch eine die Auswerteelektronik 21 speisende Betriebsspannungsquelle 65 gezeigt, mit der in üblicher Weise die zu deren Betrieb erforderlichen Spannungen und Ströme erzeugt werden. Gegebenenfalls ist es auch möglich, auf die Betriebsspannungsquelle 65 zu verzichten und stattdessen die Spannungsversorgung 66 der Umschaltanordnung 61 heranzuziehen. Umgekehrt ist es selbstverständlich auch möglich, auf die Spannungsversorgung 66 zu verzichten und die Umschaltanordnung 61 von der Betriebsspannungsquelle 65 aus zu speisen.

Bei der ersten Variante werden die digitalen Kalibrier-Daten und die digitalen Nullpunktversatz-Daten während der Kalibrierung eines jeden Durchflußaufnehmers 11₁, 11ₙ, die bei damit zusammengeschalteter Umschaltanordnung 61 und Auswerteelektronik 21 erfolgt, im elektronischen Speicher 41 gespeichert. Im Betriebsfall werden die zum gerade messenden, aktiven Durchflußaufnehmer 11₁, 11ₙ gehörenden Daten wieder an die Verarbeitungseinheit 31 ausgelesen. Dies ist in Fig. 1 durch den zwischen Speicher 41 und Verarbeitungseinheit 31 eingezeichneten Datenbus veranschaulicht.

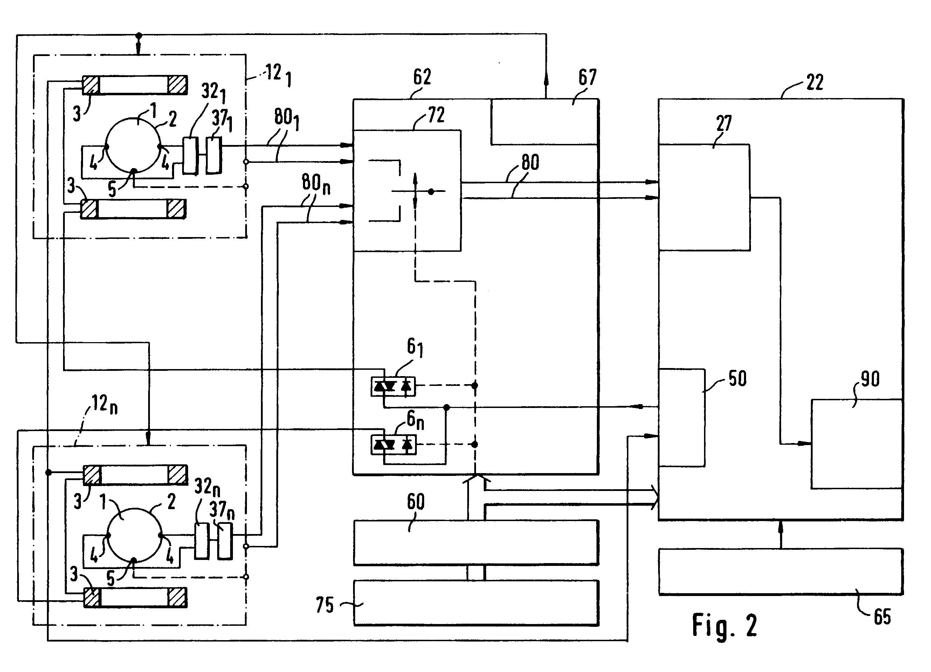

Bei der anhand der Fig. 2 nun zu erläuternden zweiten Variante ist eine gegenüber Fig.1 andere Aufteilung der einzelnen Teilschaltungen auf die Durchflußaufnehmer, die Umschaltanordnung und die Auswerteelektronik vorgenommen. So enthält jeder Durchflußaufnehmer 12₁, 12ₙ eine Verarbeitungseinheit 32₁, 32ₙ für die Potentiale der Meßelektroden 4 und eine dieser nachgeschaltete analoge Kalibrier- und Nullpunktabgleichanordnung 37₁, 37ₙ.

Im Unterschied zu Fig. 1 geschieht das "Festhalten" der Kalibrier- und Nullpunktabgleichergebnisse bei der Kalibrierung hier nicht digital, sondern analog, d.h. zur Umschaltanordnung 62 wird jeweils ein kalibriertes analoges Signal als Ausgangssignal der Kalibrier- und Nullpunktabgleichanordnung 37₁, 37ₙ über die Doppel-Schaltpfade 80₁-80, 80ₙ-80 weitergeleitet. Dieses Ausgangssignal des jeweiligen Durchflußaufnehmer 12₁, 12ₙ kann auch als dessen jeweiliges normiertes Ausgangssignal betrachtet werden. In der Auswerteelektronik 22 ist, da ein wesentlicher Teil der Meßsignal-Aufbereitung bereits im jeweiligen Durchflußaufnehmer erfolgt, nur noch eine Weiterverarbeitungseinheit 27 erforderlich, deren Ausgangssignal dem Display 90 zugeführt ist. Ferner ist wieder die Generatorschaltung 50 für den Spulenstrom in der Auswerteelektronik 22 vorhanden, die von der Betriebsspannungsquelle 65 gespeist ist.

Die Umschaltanordnung 62 von Fig. 2 enthält eine dauernde Spannungsversorgung 67 der jeweiligen Verarbeitungseinheit 32₁, 32ₙ aller Durchflußaufnehmer 12₁, 12ₙ. Je Durchflußaufnehmer 12₁, 12ₙ enthält sie ferner wieder den Optotriac 6₁, 6ₙ und einen Analogmultiplexer 72 mit den erwähnten Doppel-Schaltpfaden 80₁-80, 80ₙ-80, die das Ausgangssignal der Kalibrier- und Nullpunktabgleichanordnung 37₁, 37ₙ und die Schaltungsnullpunkt-Leitung des gerade mit der Auswerteelektronik 22 zu verbindenden, also aktiven, Durchflußaufnehmers 12₁, 12ₙ in Abhängigkeit von der an der Bedienoberfläche 75 vorzunehmenden Eingabe der Ablaufsteuerung 60 durchschalten.

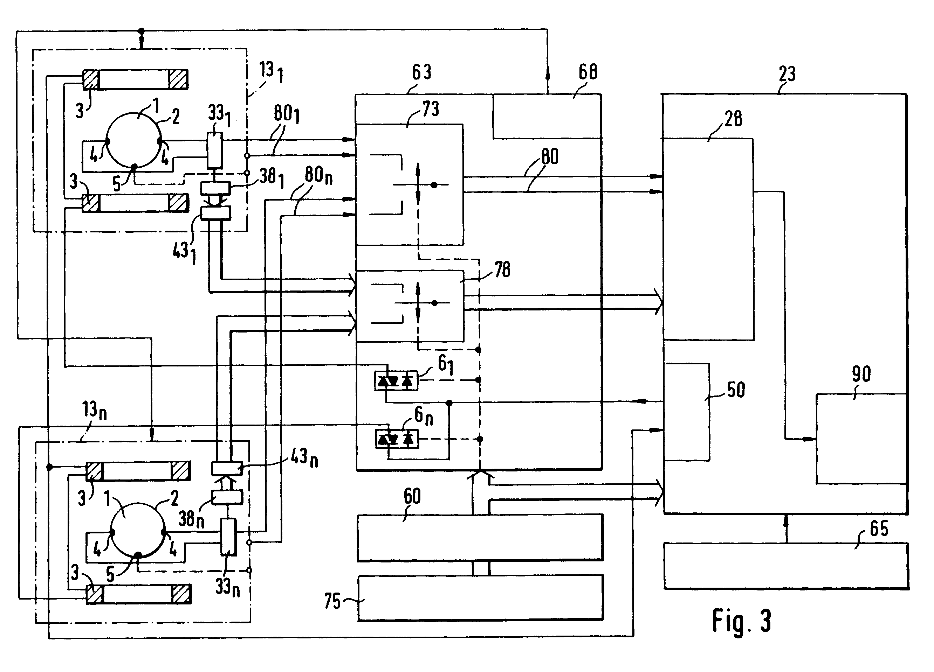

Bei der anhand der Fig. 3 nun zu erläuternden dritten Variante ist eine gegenüber Fig.1 und Fig. 2 wieder andere Aufteilung der einzelnen Teilschaltungen auf die Durchflußaufnehmer, die Umschaltanordnung und die Auswerteelektronik vorgenommen. So enthält jeder Durchflußaufnehmer 13₁, 13ₙ eine Verarbeitungseinheit 33₁, 33ₙ für die Potentiale der Meßelektroden 4, eine dieser nachgeschaltete digitale Kalibrier- und Nullpunktabgleichanordnung 38₁, 38ₙ, die digitale Kalibrier-Daten und digitale Nullpunktversatz-Daten erzeugt. Hierzu enthält sie wie die vergleichbare digitale Kalibrier- und Nullpunktabgleichanordnung 36 von Fig. 1 eingangsseitig einen Analog/Digital-Wandler. Bezüglich der Kalibrier-Daten und der Nullpunktversatz-Daten gilt das oben Erläuterte. Diese Daten entstehen während des Kalibrierens und werden in einem elektronischen Speicher 43₁, 43ₙ abgelegt.

Die Umschaltanordnung 63 von Fig. 3 enthält eine dauernde Spannungsversorgung 68 der jeweiligen Teilschaltungen 33₁, 33ₙ; 38₁, 38ₙ; 43₁, 43ₙ aller Durchflußaufnehmer 13₁, 13ₙ. Je Durchflußaufnehmer 13₁, 13ₙ enthält sie ferner wieder den Optotriac 6₁, 6ₙ und einen Analogmultiplexer 73 mit den erwähnten Doppel-Schaltpfaden 80₁-80, 80ₙ-80, die das Ausgangssignal der jeweiligen Verarbeitungseinheit 33₁, 33ₙ und die Schaltungsnullpunkt-Leitung des gerade mit der Auswerteelektronik 23 zu verbindenden, also aktiven, Durchflußaufnehmers 13₁, 13ₙ in Abhängigkeit von der an der Bedienoberfläche 75 vorzunehmenden Eingabe der Ablaufsteuerung 60 durchschalten.

Die Umschaltanordnung 63 von Fig. 3 enthält ferner einen Digitalmultiplexer 78 für die Durchschaltung der Kalibrier-Daten und der Nullpunktversatz-Daten des aktivierten und mit der Auswerteelektronik 23 zu verbindenden Durchflußaufnehmers 13₁, 13ₙ. Der Digitalmultiplexer 78 wird zusammen mit dem Analogmultiplexer 73 in Abhängigkeit von der an der Bedienoberfläche 75 vorzunehmenden Eingabe über die Ablaufsteuerung 60 auf Durchschalten des ausgewählten Durchflußaufnehmers gesteuert. Dies ist wieder durch die gestrichelte Verbindungslinie veranschaulicht.

Über die die Speicher 43₁, 43ₙ mit dem Digitalmultiplexer 78 der Umschaltanordnung 63 verbindenden Datenbusse sind selbstverständlich auch die die Speicherplätze auswählenden Adreßdaten geführt, die von der Ablaufsteuerung 60 stammen.

Die Auswerteelektronik 23 von Fig. 3 enthält eine Weiterverarbeitungseinheit 28, die sich von der entsprechenden Weiterverarbeitungseinheit 27 der Fig. 2 im wesentlichen dadurch unterscheidet, daß sie nicht nur das Ausgangssignal der Verarbeitungseinheit 33₁, 33ₙ, sondern auch die Kalibrier-Daten und die Nullpunktversatz-Daten des gerade messenden Durchflußaufnehmers 13₁, 13ₙ zugeführt erhält und prozessiert.

Die Auswerteelektronik 23 von Fig. 3 enthält ferner die Generatorschaltung 50 und das Display 90, deren Funktion oben bereits erläutert ist. Schließlich ist auch wieder die Spannungsversorgung 65 vorgesehen.

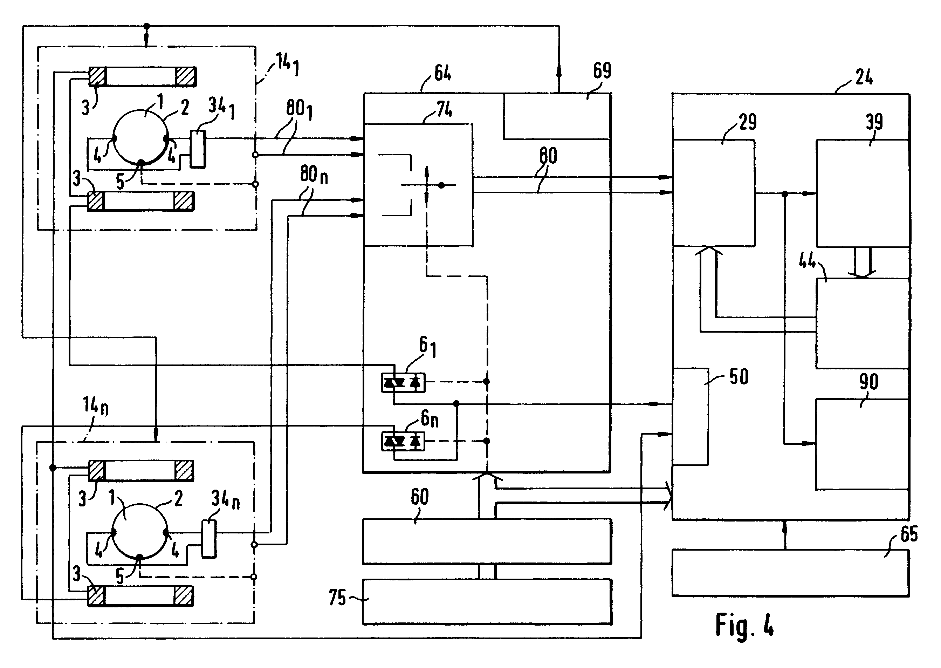

Bei der anhand der Fig. 4 nun zu erläuternden vierten Variante ist eine gegenüber den Fig.1 bis Fig. 3 nochmals andere Aufteilung der einzelnen Teilschaltungen auf die Durchflußaufnehmer, die Umschaltanordnung und die Auswerteelektronik vorgenommem. So enthält jeder Durchflußaufnehmer 14₁, 14ₙ eine Verarbeitungseinheit 34₁, 34ₙ für die Potentiale der Meßelektroden 4.

Die Umschaltanordnung 64 von Fig. 4 enthält eine dauernde Spannungsversorgung 69 der jeweiligen Teilschaltungen 34₁, 34ₙ aller Durchflußaufnehmer 14₁, 14ₙ. Je Durchflußaufnehmer 14₁, 14ₙ enthält sie ferner wieder den Optotriac 6₁, 6ₙ und einen Analogmultiplexer 74 mit den erwähnten Doppel-Schaltpfaden 80₁-80, 80ₙ-80, die das Ausgangssignal der jeweiligen Verarbeitungseinheit 34₁, 34ₙ und die Schaltungsnullpunkt-Leitung des gerade mit der Auswerteelektronik 23 zu verbindenden, also aktiven, Durchflußaufnehmers 14₁, 14ₙ in Abhängigkeit von der an der Bedienoberfläche 75 vorzunehmenden Eingabe der Ablaufsteuerung 60 durchschalten.

Die Auswerteelektronik 24 von Fig. 4 enthält eine Weiterverarbeitungseinheit 29. Dieser ist eine digitale Kalibrier- und Nullpunktabgleichanordnung 39 nachgeschaltet, mittels der während einer Kalibrier- und Abgleichphase digitale Kalibrier-Daten und digitale Nullpunktversatz-Daten der Durchflußaufnehmer 14₁, 14ₙ gebildet werden.

Die Auswerteelektronik 24 von Fig. 4 enthält ferner einen elektronischen Speicher 44 für die Kalibrier-Daten und die Nullpunktversatz-Daten aller Durchflußaufnehmer 14₁, 14ₙ, die in diesen Speicher 44 während der erwähnten Kalibrier- und Abgleichphase eingelesen werden. Im Meßbetrieb werden die zum gerade messenden, also aktiven, Durchflußaufnehmer 14₁, 14ₙ gehörenden Daten aus dem Speicher 44 an die Weiterverarbeitungseinheit 29 ausgelesen. Die dafür erforderliche Aressierung stammt, wie im übrigen auch bei der Variante nach Fig. 1, aus der Ablaufsteuerung 60, zu welchem Zweck deren Datenbus-Verbindung mit der Auswerteelektronik 24 (bzw. 21 in Fig. 1) vorgesehen ist.

Die Auswerteelektronik 24 von Fig. 4 enthält ferner wiederum die Generatorschaltung 50 zur Erzeugung des Spulenstroms sowie das Display 90 und ist von der Spannungsversorgung 65 gespeist.

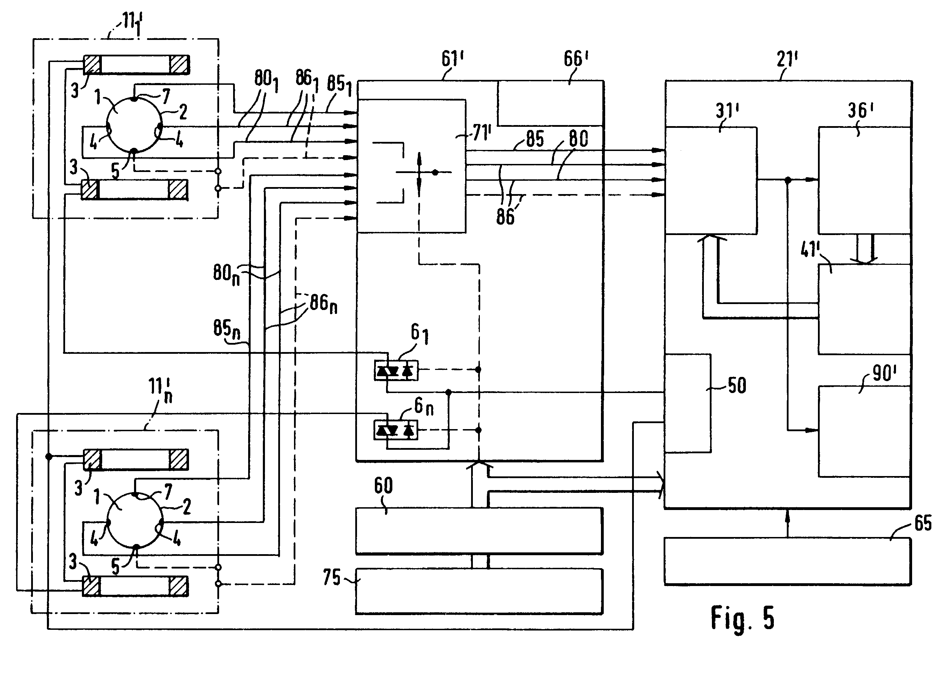

Bei der anhand der Fig. 5 nun zu erläuternden, bei allen vier Varianten möglichen Weiterbildung hat der Analogmultiplexer 71' in der Umschaltanordnung 61' soviele Zusatzschaltpfade 85₁-85, 85ₙ-85 je Durchflußaufnehmer 11₁', 11ₙ', wie Zusatzelektroden, die in der Wand des jeweiligen Meßrohres 2 angeordnet sind, je Durchflußaufnehmer 11₁', 11ₙ' vorgesehen sind und die als Fluid-Überwachungselektroden 7 dienen. Der/die Zusatzschaltpfad/pfade schalten die Fluid-Überwachungselektrode 7 des gerade mit der Auswerteelektronik 21' zu verbindenden Durchflußaufnehmers 11₁' 11ₙ' durch.

Die Verarbeitungseinheit 31' in der Auswerteelektronik 21' enthält zusätzlich eine entsprechende Teilschaltung zur Verarbeitung des Signals der Fluid-Überwachungselektrode 7, die von üblicher Art sein kann. Die weiteren Teilschaltungen von Fig. 5 entsprechen denen der Fig. 1; ihre Bezugszeichen tragen jedoch, soweit sie von der Weiterbildung betroffen sind, einen Apostroph, vgl. die Bezugszeichen 36', 41', 66' und 90'.

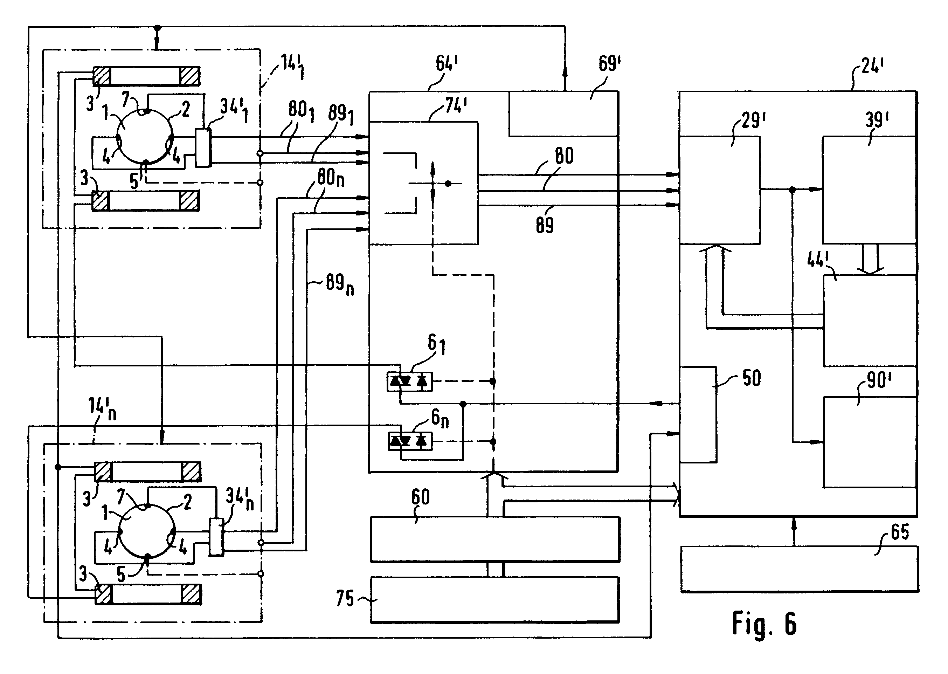

Bei der anhand der Fig. 6 schließlich noch zu erläuternden, nur bei der zweiten, dritten und vierten Variante möglichen Weiterbildung enthält der Analogmultiplexer 74' in der Umschaltanordnung 64' je Durchflußaufnehmer 14₁, 14ₙ' einen Zusatzschaltpfad 89₁-89, 89ₙ-89, über den ein von der Verarbeitungseinheit 34₁', 34ₙ' erzeugtes Fluid-Überwachungssignal durchgeschaltet wird. Dieses wird von der Verarbeitungseinheit 34₁', 34ₙ' aus einem ihr von der mindestens einen als Fluid-Überwachungselektrode 7 dienenden Zusatzelektrode zugeführten Signal erzeugt, die in der Wand des jeweiligen Durchflußaufnehmers 14₁', 14ₙ' angeordnet ist.

Die Weiterverarbeitungseinheit 29' in der Auswerteelektronik 24' enthält zusätzlich eine entsprechende Teilschaltung zur Verarbeitung des Signals der Fluid-Überwachungselektrode 7, die von üblicher Art sein kann. Die weiteren Teilschaltungen von Fig. 6 entsprechen denen der Fig. 4; ihre Bezugszeichen tragen jedoch, soweit sie von der Weiterbildung betroffen sind, einen Apostroph, vgl. die Bezugszeichen 39', 44', 69' und 90'.

## Patentansprüche

1. Magnetisch-induktive Durchflußmesser-Anordnung
- mit mehreren magnetisch-induktiven Durchflußaufnehmern (11₁, 11ₙ), deren jeder
-- ein von einem zu messenden, elektrisch leitenden Fluid (1) durchströmtes, nicht-ferromagnetisches, gegen das Fluid elektrisch isoliertes Meßrohr (2),
-- eine Spulenanordnung (3) zur Erzeugung eines das Meßrohr (2) diametral und senkrecht zur Längsachse des Meßrohrs durchsetzenden Magnetfelds, wenn darin ein Spulenstrom fließt, und
-- Elektroden, von denen entweder
--- zwei diametral in oder an der Wand des Meßrohres angeordnete Meßelektroden (4), deren Verbindungslinie senkrecht zur Richtung des Magnetfelds ist, der Abnahme der vom Magnetfeld induzierten Potentiale dienen oder
--- zwei diametral in oder an der Wand des Meßrohres angeordnete Meßelektroden (4), deren Verbindungslinie senkrecht zur Richtung des Magnetfelds ist, der Abnahme der vom Magnetfeld induzierten Potentiale dienen und mindestens eine weitere in der Wand des Meßrohres (2) angeordnete Elektrode als Schaltungsnullpunkt-Elektrode (5) des Fluids (1) dient, umfaßt,
- mit einer einzigen Auswerteelektronik (21), die
-- eine Verarbeitungseinheit (31) für die Potentiale,
-- eine dieser nachgeschaltete digitale Kalibrier- und Nullpunktabgleichanordnung (36), die digitale Kalibrier-Daten und digitale Nullpunktversatz-Daten erzeugt,
-- einen elektronischen Speicher (41) für die digitalen Kalibrier-Daten und die digitalen Nullpunktversatz-Daten aller Durchflußaufnehmer und
-- eine Generatorschaltung (50) zur Erzeugung des Spulenstroms enthält, und
- mit einer Umschaltanordnug (61) zum zeitlich aufeinanderfolgenden Einzelanschluß eines jeden der Durchflußaufnehmer (11₁, 11ₙ), die je Durchflußaufnehmer umfaßt:
-- einen optisch angesteuerten, im Stromnulldurchgang selbstlöschenden Thyristor (6₁, 6ₙ), dessen Hauptstrompfad in einer der zugehörigen Spulenleitungen angeordnet ist, und
-- einen Analogmultiplexer (71) mit
--- sovielen Doppel-Schaltpfaden (80₁-80, 80ₙ-80) oder Tripel- Schaltpfaden (86₁-86, 86ₙ-86), wie Durchflußaufnehmer (11₁, 11ₙ) vorgesehen sind,
---- welche Doppel-Schaltpfade entweder die beiden Meßelektroden (4) oder welche Tripel-Schaltpfade die beiden Meßelektroden (4) und die Schaltungsnullpunkt-Elektrode (5) des gerade mit der Auswerteelektronik (21) zu verbindenden Durchflußaufnehmers (11₁, 11ₙ) durchschalten,
- wobei die digitalen Kalibrier-Daten und die digitalen Nullpunktversatz-Daten während der Kalibrierung eines jeden Durchflußaufnehmers (11₁, 11ₙ) im elektronischen Speicher (41) gespeichert worden sind und
- wobei die zum gerade messenden Durchflußaufnehmer (11₁, 11ₙ) gehörenden Kalibrier- und Nullpunktversatz-Daten an die Verarbeitungseinheit (31) ausgelesen werden.

2. Magnetisch-induktive Durchflußmesser-Anordnung
- mit mehreren magnetisch-induktiven Durchflußaufnehmern (12₁, 12ₙ), deren jeder
-- ein von einem zu messenden, elektrisch leitenden Fluid (1) durchströmtes, nicht-ferromagnetisches, gegen das Fluid elektrisch isoliertes Meßrohr (2),
-- eine Spulenanordnung (3) zur Erzeugung eines das Meßrohr (2) diametral und senkrecht zur Längsachse des Meßrohrs durchsetzenden Magnetfelds, wenn darin ein Spulenstrom fließt, und
-- Elektroden, von denen entweder
--- zwei diametral in oder an der Wand des Meßrohres angeordnete Meßelektroden (4), deren Verbindungslinie senkrecht zur Richtung des Magnetfelds ist, der Abnahme der vom Magnetfeld induzierten Potentiale dienen oder
--- zwei diametral in oder an der Wand des Meßrohres angeordnete Meßelektroden (4), deren Verbindungslinie senkrecht zur Richtung des Magnetfelds ist, der Abnahme der vom Magnetfeld induzierten Potentiale dienen und mindestens eine weitere in der Wand des Meßrohres (2) angeordnete Elektrode als Schaltungsnullpunkt-Elektrode (5) des Fluids (1) dient,
-- eine Verarbeitungseinheit (32₁, 32ₙ) für die Potentiale und
-- eine dieser nachgeschaltete analoge Kalibrier- und Nullpunktabgleichanordnung (37₁, 37ₙ) umfaßt,
- mit einer einzigen Auswerteelektronik (22), die
-- eine Weiterverarbeitungseinheit (27) für das Ausgangssignal der Kalibrier- und Nullpunktabgleichanordnung (37₁, 37ₙ) des gerade messenden Durchflußaufnehmers (12₁, 12ₙ) sowie
-- eine Generatorschaltung (50) zur Erzeugung des Spulenstroms enthält, und
- mit einer Umschaltanordnug (62) zum zeitlich aufeinanderfolgenden Einzelanschluß eines jeden der Durchflußaufnehmer (12₁, 12ₙ), die
-- eine dauernde Spannungsversorgung (67) der jeweiligen Verarbeitungseinheit (32₁, 32ₙ) aller Durchflußaufnehmer (12₁, 12ₙ) und
-- je Durchflußaufnehmer (12₁, 12ₙ) umfaßt:
--- einen optisch angesteuerten, im Stromnulldurchgang selbstlöschenden Thyristor (6₁, 6ₙ), dessen Hauptstrompfad in einer der zugehörigen Spulenleitungen angeordnet ist, und
--- einen Analogmultiplexer (72) mit so vielen Doppel-Schaltpfaden (80₁-80, 80ₙ-80), wie Durchflußaufnehmer (12₁, 12ₙ) vorgesehen sind,
---- welche Doppel-Schaltpfade entweder das Ausgangssignal der Kalibrier- und Nullpunktabgleichanordnung (37₁, 37ₙ) oder das Ausgangssignal der Kalibrier- und Nullpunktabgleichanordnung (37₁, 37ₙ) und die Schaltungsnullpunkt-Elektrode des gerade mit der Auswerteelektronik (22) zu verbindenden Durchflußaufnehmers (12₁, 12ₙ) durchschalten.

3. Magnetisch-induktive Durchflußmesser-Anordnung
- mit mehreren magnetisch-induktiven Durchflußaufnehmern (13₁, 13ₙ), deren jeder
-- ein von einem zu messenden, elektrisch leitenden Fluid (1) durchströmtes, nicht-ferromagnetisches, gegen das Fluid elektrisch isoliertes Meßrohr (2),
-- eine Spulenanordnung (3) zur Erzeugung eines das Meßrohr (2) diametral und senkrecht zur Längsachse des Meßrohrs durchsetzenden Magnetfelds, wenn darin ein Spulenstrom fließt, und
-- Elektroden, von denen entweder
--- zwei diametral in oder an der Wand des Meßrohres angeordnete Meßelektroden (4), deren Verbindungslinie senkrecht zur Richtung des Magnetfelds ist, der Abnahme der vom Magnetfeld induzierten Potentiale dienen oder
--- zwei diametral in oder an der Wand des Meßrohres angeordnete Meßelektroden (4), deren Verbindungslinie senkrecht zur Richtung des Magnetfelds ist, der Abnahme der vom Magnetfeld induzierten Potentiale dienen und mindestens eine weitere in der Wand des Meßrohres (2) angeordnete Elektrode als Schaltungsnullpunkt-Elektrode (5) des Fluids (1) dient,
-- eine Verarbeitungseinheit (33₁, 33ₙ) für die Potentiale,
-- eine dieser nachgeschaltete digitale Kalibrier- und Nullpunktabgleichanordnung (38₁, 38ₙ), die beim Kalibrieren digitale Kalibrier-Daten und digitale Nullpunktversatz-Daten erzeugt, und
-- einen elektronischen Speicher (43₁, 43ₙ) für die digitalen Kalibrier-Daten und die digitalen Nullpunktversatz-Daten umfaßt,
- mit einer einzigen Auswerteelektronik (23), die
-- eine Weiterverarbeitungseinheit (28) für das Ausgangssignal der Verarbeitungseinheit (33₁, 33ₙ), für die Kalibrier-Daten und für die Nullpunktversatz-Daten des gerade messenden Durchflußaufnehmers (13₁, 13ₙ) sowie
-- eine Generatorschaltung (50) zur Erzeugung des Spulenstroms enthält, und
- mit einer Umschaltanordnug (63) zum zeitlich aufeinanderfolgenden Einzelanschluß eines jeden der Durchflußaufnehmer (13₁, 13ₙ), die
-- eine dauernde Spannungsversorgung (68) der jeweiligen Verarbeitungseinheit (33₁, 33ₙ) aller Durchflußaufnehmer (13₁, 13ₙ) und
-- je Durchflußaufnehmer (13₁, 13ₙ) umfaßt:
--- einen optisch angesteuerten, im Stromnulldurchgang selbstlöschenden Thyristor (6₁, 6ₙ), dessen Hauptstrompfad in einer der zugehörigen Spulenleitungen angeordnet ist,
--- einen Analogmultiplexer (73) mit so vielen Doppel-Schaltpfaden (80₁-80, 80ₙ-80), wie Durchflußaufnehmer (13₁, 13ₙ) vorgesehen sind,
---- welche Doppel-Schaltpfade entweder das Ausgangssignal der Verarbeitungseinheit (33₁, 33ₙ) oder das Ausgangssignal der Verarbeitungseinheit (33₁, 33ₙ) und die Schaltungsnullpunkt-Elektrode des gerade mit der Auswerteelektronik (23) zu verbindenden Durchflußaufnehmers (13₁, 13ₙ) durchschalten, und
--- einen Digitalmultiplexer (78) für die Durchschaltung der Kalibrier-Daten und der Nullpunktversatz-Daten des gerade mit der Auswerteelektronik (23) zu verbindenden Durchflußaufnehmers (13₁, 13ₙ).

4. Magnetisch-induktive Durchflußmesser-Anordnung
- mit mehreren magnetisch-induktiven Durchflußaufnehmern (14₁, 14ₙ), deren jeder
-- ein von einem zu messenden, elektrisch leitenden Fluid (1) durchströmtes, nicht-ferromagnetisches, gegen das Fluid elektrisch isoliertes Meßrohr (2),
-- eine Spulenanordnung (3) zur Erzeugung eines das Meßrohr (2) diametral und senkrecht zur Längsachse des Meßrohrs durchsetzenden Magnetfelds, wenn darin ein Spulenstrom fließt, und
-- Elektroden, von denen entweder
--- zwei diametral in oder an der Wand des Meßrohres angeordnete Meßelektroden (4), deren Verbindungslinie senkrecht zur Richtung des Magnetfelds ist, der Abnahme der vom Magnetfeld induzierten Potentiale dienen oder
--- zwei diametral in oder an der Wand des Meßrohres angeordnete Meßelektroden (4), deren Verbindungslinie senkrecht zur Richtung des Magnetfelds ist, der Abnahme der vom Magnetfeld induzierten Potentiale dienen und mindestens eine weitere in der Wand des Meßrohres (2) angeordnete Elektrode als Schaltungsnullpunkt-Elektrode (5) des Fluids (1) dient, und
-- eine Verarbeitungseinheit (34₁, 34ₙ) für die Potentiale umfaßt,
- mit einer einzigen Auswerteelektronik (24), die
-- eine Weiterverarbeitungseinheit (29) für das Ausgangssignal der Verarbeitungseinheit (34₁, 34ₙ),
-- eine dieser nachgeschaltete digitale Kalibrier- und Nullpunktabgleichanordnung (39),
--- mittels der während einer Kalibrier- und Abgleichphase digitale Kalibrier-Daten und digitale Nullpunktversatz-Daten der Durchflußaufnehmer (14₁, 14ₙ) gebildet werden,
-- einen elektronischen Speicher (44) für die Kalibrier-Daten und die Nullpunktversatz-Daten aller Durchflußaufnehmer (14₁, 14ₙ),
--- von denen die zum gerade messenden Durchflußaufnehmer (14₁, 14ₙ) gehörenden Daten im Meßbetrieb aus dem Speicher (44) an die Weiterverarbeitungseinheit (29) ausgelesen werden, und
-- eine Generatorschaltung (50) zur Erzeugung des Spulenstroms enthält, und
- mit einer Umschaltanordnug (64) zum zeitlich aufeinanderfolgenden Einzelanschluß eines jeden der Durchflußaufnehmer (14₁, 14ₙ), die
-- eine dauernde Spannungsversorgung (69) der jeweiligen Verarbeitungseinheit (34) aller Durchflußaufnehmer (14₁, 14ₙ) und
-- je Durchflußaufnehmer (14₁, 14ₙ) umfaßt:
--- einen optisch angesteuerten, im Stromnulldurchgang selbstlöschenden Thyristor (6₁, 6ₙ), dessen Hauptstrompfad in einer der zugehörigen Spulenleitungen angeordnet ist, und
--- einen Analogmultiplexer (74) mit so vielen Doppel-Schaltpfaden (80₁-80, 80ₙ-80), wie Durchflußaufnehmer (14₁, 14ₙ) vorgesehen sind,
---- welche Doppel-Schaltpfade entweder das Ausgangssignal der Verarbeitungseinheit (34₁, 34ₙ) oder das Ausgangssignal der Verarbeitungseinheit (34₁, 34ₙ) und die Schaltungsnullpunkt-Elektrode des gerade mit der Auswerteelektronik (24) zu verbindenden Durchflußaufnehmers (14₁, 14ₙ) durchschalten.

5. Schaltungsanordnung nach einem der Ansprüche 1 bis 4 mit einem Analogmultiplexer (70), der soviele Zusatzschaltpfade (85₁-85, 85ₙ-85) je Durchflußaufnehmer (11₁', 11ₙ') enthält, wie Zusatzelektroden, die in der Wand des jeweiligen Meßrohres (2) angeordnet sind, je Durchflußaufnehmer vorgesehen sind und die als Fluid-Überwachungselektroden (7) dienen, welche(r) Zusatzschaltpfad(e) (85) die Fluid-Überwachungselektrode(n) (7) des gerade mit der Auswerteelektronik (21') zu verbindenden Durchflußaufnehmers durchschalten.

6. Schaltungsanordnung nach einem der Ansprüche 2 bis 4 mit einem Analogmultiplexer (74'), der je Durchflußaufnehmer (14₁', 14ₙ') einen Zusatzschaltpfad (89₁-89, 89ₙ-89) enthält, über den ein von der Verarbeitungseinheit (34') erzeugtes Fluid-Überwachungssignal durchgeschaltet wird, das die Verarbeitungseinheit (34') aus einem ihr von mindestens einer als Fluid-Überwachungselektrode (7) dienenden Zusatselektrode zugeführten Signal erzeugt, die in der Wand des jeweiligen Durchflußaufnehmers (14₁', 14ₙ') angeordnet ist.

## Claims

1. A magnetic flowmeter arrangement
- with a plurality of magnetic flow sensors (11₁, 11ₙ) each comprising
-- a nonferromagnetic measuring tube (2) through which flows an electrically conductive fluid (1) to be measured and which is electrically insulated from the fluid,
-- a coil arrangement (3) for producing a magnetic field passing through the measuring tube (2) diametrically and perpendicularly to the longitudinal axis thereof when a coil current flows therein, and
-- electrodes, of which either
--- two measuring electrodes (4) which are mounted diametrically in or on the wall of the measuring tube and whose connecting line is perpendicular to the direction of the magnetic field serve to pick off the potentials induced by the magnetic field, or
--- two measuring electrodes (4) which are mounted diametrically in or on the wall of the measuring tube and whose connecting line is perpendicular to the direction of the magnetic field serve to pick off the potentials induced by the magnetic field, and at least one additional electrode mounted in the wall of the measuring tube serves as a neutral electrode (5) of the fluid (1),
- with a single electronic evaluating unit (21) comprising
-- a processing unit (31) for the potentials,
-- a digital calibrating and zero-balancing arrangement (36) succeeding the processing unit and generating digitial calibration data and digital zero-offset data,
-- an electronic memory (41) for the digital calibration data and the digital zero-offset data of all the flow sensors, and
-- a generator circuit (50) for generating the coil current,
- with a switching arrangement (61) for connecting the flow sensors (11₁, 11ₙ) successively in time, said switching arrangement comprising for each flow sensor:
-- an optically controlled current-zero turn-off thyristor (6₁, 6ₙ) whose main current path is contained in one of the associated coil lines, and
-- an analog multiplexer (71) having
--- as many double switching paths (80₁-80, 80ₙ-80) or triple switching paths (86₁-86, 86ₙ-86) as there are flow sensors (11₁, 11ₙ),
---- said double switching paths or triple switching paths switching through, respectively, the signals from the two measuring electrodes (4) or the signals from the two measuring electrodes (4) and the neutral electrode (5) of the respective flow sensor (11₁, 11ₙ) to be connected to the electronic evaluating unit (21),
- with the digital calibration data and the digital zero-offset data stored in the electronic memory (41) during the calibration of each flow sensor (11₁, 11ₙ), and
- the calibration and zero-offset data of the currently measuring flow sensor being read to the processing unit (31).

2. A magnetic flowmeter arrangement
- with a plurality of magnetic flow sensors (12₁, 12ₙ) each comprising
-- a nonferromagnetic measuring tube (2) through which flows an electrically conductive fluid (1) to be measured and which is electrically insulated from the fluid,
-- a coil arrangement (3) for producing a magnetic field passing through the measuring tube (2) diametrically and perpendicularly to the longitudinal axis thereof when a coil current flows therein, and
-- electrodes, of which either
--- two measuring electrodes (4) which are mounted diametrically in or on the wall of the measuring tube and whose connecting line is perpendicular to the direction of the magnetic field serve to pick off the potentials induced by the magnetic field, or
--- two measuring electrodes (4) which are mounted diametrically in or on the wall of the measuring tube and whose connecting line is perpendicular to the direction of the magnetic field serve to pick off the potentials induced by the magnetic field, and at least one additional electrode mounted in the wall of the measuring tube serves as a neutral electrode (5) of the fluid (1),
-- a processing unit (32₁, 32ₙ) for the potentials, and
-- an analog calibrating and zero-balancing arrangement (37₁, 37ₙ) succeeding said processing unit,
- with a single electronic evaluating unit (22) comprising
-- a further-processing unit (27) for the output signal from the calibrating and zero-balancing arrangement (37₁, 37ₙ) of the currently measuring flow sensor (12₁, 12ₙ), and
-- a generator circuit (50) for generating the coil current,
- with a switching arrangement (62) for connecting the flow sensors (12₁, 12ₙ) successively in time, said switching arrangement comprising
-- a constant power supply (67) for the respective processing units (32₁, 32ₙ) of all the flow sensors (12₁, 12ₙ):
-- for each flow sensor (12₁, 12ₙ):
--- an optically controlled current-zero turn-off thyristor (6₁, 6ₙ) whose main current path is contained in one of the associated coil lines, and
--- an analog multiplexer (72) having as many double switching paths (80₁-80, 80ₙ-80) as there are flow sensors (12₁, 12ₙ),
---- said double switching paths switching through either the output signal from the calibrating and zero-balancing arrangement (37₁, 37ₙ) or the output signals from the calibrating and zero-balancing arrangement (37₁, 37ₙ) and the neutral electrode of the respective flow sensor (12₁, 12ₙ) to be connected to the electronic evaluating unit (22).

3. A magnetic flowmeter arrangement
- with a plurality of magnetic flow sensors (13₁, 13ₙ) each comprising
-- a nonferromagnetic measuring tube (2) through which flows an electrically conductive fluid (1) to be measured and which is electrically insulated from the fluid,
-- a coil arrangement (3) for producing a magnetic field passing through the measuring tube (2) diametrically and perpendicularly to the longitudinal axis thereof when a coil current flows therein, and
-- electrodes, of which either
--- two measuring electrodes (4) which are mounted diametrically in or on the wall of the measuring tube and whose connecting line is perpendicular to the direction of the magnetic field serve to pick off the potentials induced by the magnetic field, or
--- two measuring electrodes (4) which are mounted diametrically in or on the wall of the measuring tube and whose connecting line is perpendicular to the direction of the magnetic field serve to pick off the potentials induced by the magnetic field, and at least one additional electrode mounted in the wall of the measuring tube serves as a neutral electrode (5) of the fluid (1),
-- a processing unit (33₁, 33ₙ) for the potentials,
-- a digital calibrating and zero-balancing arrangement (38₁, 38ₙ) succeeding said processing unit and generating digital calibration data and digital zero-offset data during calibration, and
-- an electronic memory (43₁, 43ₙ) for the digital calibration data and the digital zero-offset data,
- with a single electronic evaluating unit (23) comprising
- a further-processing unit (28) for the output signal from the processing unit (33₁, 33ₙ), for the calibration data, and for the zero-offset data of the currently measuring flow sensor (13₁, 13ₙ), and
-- a generator circuit (50) for generating the coil current,
- with a switching arrangement (63) for connecting the flow sensors (13₁, 13ₙ) successively in time, said switching arrangement comprising
-- a constant power supply (68) for the respective processing units (33₁, 33ₙ) of all the flow sensors (13₁, 13ₙ), and
-- for each flow sensor (13₁, 13ₙ):
--- an optically controlled current-zero turn-off thyristor (6₁, 6ₙ) whose main current path is contained in one of the associated coil lines, and
--- an analog multiplexer (73) having as many double switching paths (80₁-80, 80ₙ-80) as there are flow sensors (13₁, 13ₙ),
---- said double switching paths switching through either the output signal from the processing unit (33₁, 33ₙ) or the output signals from the processing unit (33₁, 33ₙ) and the neutral electrode of the respective flow sensor (13₁, 13ₙ) to be connected to the electronic evaluating unit (23), and
--- a digital multiplexer (78) for switching through the calibration data and the zero-offset data of the respective sensor (13₁, 13ₙ) to be connected to the electronic evaluating unit (23).

4. A magnetic flowmeter arrangement
- with a plurality of magnetic flow sensors (14₁, 14ₙ) each comprising
-- a nonferromagnetic measuring tube (2) through which flows an electrically conductive fluid (1) to be measured and which is electrically insulated from the fluid,
-- a coil arrangement (3) for producing a magnetic field passing through the measuring tube (2) diametrically and perpendicularly to the longitudinal axis thereof when a coil current flows therein, and
-- electrodes, of which either
--- two measuring electrodes (4) which are mounted diametrically in or on the wall of the measuring tube and whose connecting line is perpendicular to the direction of the magnetic field serve to pick off the potentials induced by the magnetic field, or
--- two measuring electrodes (4) which are mounted diametrically in or on the wall of the measuring tube and whose connecting line is perpendicular to the direction of the magnetic field serve to pick off the potentials induced by the magnetic field, and at least one additional electrode mounted in the wall of the measuring tube serves as a neutral electrode (5) of the fluid (1),
-- a processing unit (34₁ , 34ₙ) for the potentials,
- with a single electronic evaluating unit (24) comprising
-- a further processing (29) for the output signal from the processing unit (34₁ , 34ₙ),
-- a digital calibrating and zero-balancing arrangement (39) succeeding said further processing unit,
--- said digital calibrating and zero-balancing arrangement forming digital calibration data and digital zero-offset data of the flow sensors (14₁, 14ₙ),
--- the data of the currently measuring flow sensor (14₁, 14ₙ) being read from the memory (44) to the further-processing unit (29) in the measurement mode, and
-- a generator circuit (50) for generating the coil current,
- with a switching arrangement (64) for connecting the flow sensors (14₁, 14ₙ) successively in time, said switching arrangement comprising
-- a constant power supply (69) for the respective processing units (34) of all the flow sensors (14₁, 14ₙ), and
-- for each flow sensor (14₁, 14ₙ):
--- an optically controlled current-zero turn-off thyristor (6₁, 6ₙ) whose main current path is contained in one of the associated coil lines, and
--- an analog multiplexer (74) having as many double switching paths (80₁-80, 80ₙ-80) as there are flow sensors (14₁, 14ₙ),
---- said double switching paths switching through either the output signal from the processing unit (34₁, 34ₙ) or the output signals from the processing unit (34₁, 34ₙ) and the neutral electrode of the respective flow sensor (14₁, 14ₙ) to be connected to the electronic evaluating unit (24).

5. A circuit arrangement as claimed in any one of claims 1 to 4, comprising an analog multiplexer (70) which contains as many additional switching paths (85₁-85, 85ₙ-85) per flow sensor (11₁'-11ₙ') as there are additional electrodes per flow sensor, which are mounted in the wall of the respective flow sensor (2) and serve as fluid-monitoring electrodes (7), said additional switching path(s) (85) switching through the signal(s) from the fluid-monitoring electrode(s) (7) of the respective flow sensor to be connected to the electronic evaluating unit (21').

6. A circuit arrangement as claimed in any one of claims 2 to 4, comprising an analog multiplexer (74') containing one additional switching path (89₁-89, 89ₙ-89) per flow sensor (14₁', 14ₙ') which switches through a fluid-monitoring signal generated by the processing unit (34') from a signal applied to it from at least one additional electrode which serves as a fluid-monitoring electrode (7) and is mounted in the wall of the respective flow sensor (14₁', 14ₙ').

## Revendications

1. Débitmètre électromagnétique
- avec plusieurs capteurs électromagnétiques (11₁, 11ₙ), dont chacun comprend
-- un tube de mesure (2) traversé par un fluide (1) électroconducteur devant être mesuré, non-ferromagnétique et isolé contre le courant électrique du fluide,
-- un agencement de bobines (3) destiné à produire un champ magnétique traversant le tube de mesure (2) diamétralement et perpendiculairement à l'axe longitudinal du tube de mesure, et
-- des électrodes, dont
--- soit deux électrodes de mesurage (4), disposées diamétralement dans ou sur la paroi du tube de mesure et dont la ligne de jonction est perpendiculaire à la direction du champ magnétique, servent à réduire les potentiels induits par le champ magnétique,
--- soit deux électrodes de mesurage (4), disposées diamétralement dans ou sur la paroi du tube de mesure et dont la ligne de jonction est perpendiculaire à la direction du champ magnétique, servent à réduire les potentiels induits par le champ magnétique, ainsi qu'au moins une électrode supplémentaire disposée dans la paroi du tube de mesure (2) et servant d'électrode au point zéro de commutation (5) du fluide (1),
- avec un seul dispositif électronique d'évaluation (21), lequel contient
-- une unité de traitement (31) pour les potentiels,
-- un dispositif digital de calibrage et de compensation du point zéro (36) raccordé à l'unité de traitement et qui produit des données digitales de calibrage et d'ajustage du point zéro, une unité de stockage électronique (41) pour les données digitales de calibrage et d'ajustage du point zéro de tous les capteurs et
-- une commutation de générateur (50) destinée à produire le flux magnétique , et
- avec un système de commutation (61) destiné à la ligne individuelle temporaire successive de chacun des capteurs (11₁, 11ₙ), lesquels comprennent respectivement:
-- un thyristor (6₁, 6ₙ) à commande optique et auto-extincteur dans le passage de flux nul, dont la voie du courant principale est disposée dans une des conduites de bobine adjointes au thyristor, et
-- un multiplexeur analogique (71) comprenant
--- autant de voies du courant doubles (80₁-80, 80ₙ-80) ou de voies de courant triples (86₁-86, 86ₙ-86), que de capteurs (11₁, 11ₙ)prévus,
---- lesdites voies du courant doubles connectant les deux électrodes de mesurage (4) ou lesdites voies de courant triples connectant les deux électrodes de mesurage (4) et l'électrode (5) au point zéro de commutation du capteur (11₁,11ₙ) devant justement être relié avec le dispositif électronique d'évaluation (21),
- les données digitales de calibrage et d'ajustage du point zéro étant stockées dans l'unité de stockage électronique au cours du calibrage de chacun des capteurs (11₁, 11ₙ) et
- les données de calibrage et d'ajustage du point zéro relatives au capteur (11₁, 11ₙ) devant précisément être calculé sont triées sur l'unité de traitement (31).

2. Débitmètre électromagnétique
- avec plusieurs capteurs électromagnétiques (12₁, 12ₙ), dont chacun comprend
-- un tube de mesure (2) traversé par un fluide (1) électroconducteur devant être mesuré, non-ferromagnétique et isolé contre le courant électrique du fluide,
-- un agencement de bobines (3) destiné à produire un champ magnétique traversant le tube de mesure (2) diamétralement et perpendiculairement à l'axe longitudinal du tube de mesure, et
-- des électrodes, dont
--- soit deux électrodes de mesurage (4), disposées diamétralement dans ou sur la paroi du tube de mesure et dont la ligne de jonction est perpéndiculaire à la direction du champ magnétique, servent à réduire les potentiels induits par le champ magnétique,
--- soit deux électrodes de mesurage (4), disposées diamétralement dans ou sur la paroi du tube de mesure et dont la ligne de jonction est perpendiculaire à la direction du champ magnétique, servent à réduire les potentiels induits par le champ magnétique, ainsi qu'au moins une électrode supplémentaire disposée dans la paroi du tube de mesure (2) et servant d'électrode au point zéro de commutation (5) du fluide (1),
-- une unité de traitement (32₁, 32ₙ) pour les potentiels et
-- un dispositif digital analogique de calibrage et de compensation du point zéro (37₁, 37ₙ) raccordé à l'unité de traitement,
- avec un seul dispositif électronique d'évaluation (22), lequel contient
-- une unité de traitement supplémentaire (27) pour le signal de sortie du dispositif digital de calibrage et de compensation du point zéro (37₁, 37ₙ) du capteur (12₁, 12ₙ) devant justement être mesuré ainsi que
-- une commutation de générateur (50) destinée à produire le flux magnétique, et
- avec un système de commutation (62) destiné à la ligne individuelle temporaire successive de chacun des capteurs (12₁, 12ₙ), lesquels comprennent:
-- une alimentation continue en courant (67) de l'unité de traitement respective (32₁, 32ₙ) de chacun des capteurs (12₁, 12ₙ),
-- chacun des capteurs présentant :
--- un thyristor (6₁, 6ₙ) à commande optique et auto-extincteur dans le passage de flux nul, dont la voie du courant principale est disposée dans une des conduites de bobine adjointes au thyristor, et
--- un multiplexeur analogique (72) comprenant autant de voies du courant doubles (80₁-80, 80ₙ-80), que de capteurs (12₁, 12ₙ) prévus,
---- lesdites voies du courant doubles connectant soit le signal de sortie du dispositif de calibrage et de compensation du point zéro (37₁, 37ₙ) ou le signal de sortie du dispositif de calibrage et de compensation (37₁, 37ₙ) et l'électrode au point zéro de commutation du capteur (12₁, 12ₙ) devant justement être relié avec le dispositif électronique d'évaluation (22).

3. Débitmètre électromagnétique
- avec plusieurs capteurs électromagnétiques (13₁, 13ₙ), dont chacun comprend
-- un tube de mesure (2) traversé par un fluide (1) électroconducteur devant être mesuré, non-ferromagnétique et isolé contre le courant électrique du fluide,
-- un agencement de bobines (3) destiné à produire un champ magnétique traversant le tube de mesure (2) diamétralement et perpendiculairement à l'axe longitudinal du tube de mesure, et
-- des électrodes, dont
--- soit deux électrodes de mesurage (4), disposées diamétralement dans ou sur la paroi du tube de mesure et dont la ligne de jonction est perpendiculaire à la direction du champ magnétique, servent à réduire les potentiels induits par le champ magnétique,
--- soit deux électrodes de mesurage (4), disposées diamétralement dans ou sur la paroi du tube de mesure et dont la ligne de jonction est perpendiculaire à la direction du champ magnétique, servent à réduire les potentiels induits par le champ magnétique, ainsi qu'au moins une électrode supplémentaire disposée dans la paroi du tube de mesure (2) et servant d'électrode au point zéro de commutation (5) du fluide (1),
-- une unité de traitement (33₁, 33ₙ) pour les potentiels,
-- un dispositif digital de calibrage et de compensation du point zéro (38₁, 38ₙ) raccordé à l'unité de traitement et qui produit des données digitales de calibrage et d'ajustage du point zéro lors du calibrage, et
-- une unité de stockage électronique (43₁, 43ₙ) pour les données digitales de calibrage et d'ajustage du point zéro,
- avec un seul dispositif électronique d'évaluation (23), lequel contient
-- une unité de traitement supplémentaire (28) pour le signal de sortie de l'unité de traitement (33₁, 33ₙ) pour les données de calibrage et d'ajustage du point zéro du capteur (13₁, 13ₙ) devant justement être mesuré ainsi que
-- une commutation de générateur (50) destinée à produire le flux magnétique, et
- avec un système de commutation (63) destiné à la ligne individuelle temporaire sucessive de chacun des capteurs (13₁, 13ₙ), lesquels comprennent
-- une alimentation continue en courant (68) de l'unité de traitement respective (33₁, 33ₙ) de chacun des capteurs (13₁, 13ₙ) et -- chacun des capteurs (13₁, 13ₙ) présentant
--- un thyristor (6₁, 6ₙ) à commande optique et auto-extincteur dans le passage de flux nul, dont la voie du courant principal est disposée dans une des conduites de bobine adjointes au thyristor,
--- un multiplexeur analogique (73) comprenant autant de coies du courant doubles (80₁-80, 80ₙ-80), que de capteurs (13₁, 13ₙ),
---- lesdites voies du courant doubles connectant soit le signal de sortie de l'unité de traitement (33₁, 33ₙ), soit le signal de sortie de l'unité de traitement (33₁, 33ₙ) et l'électrode au point zéro de commutation du capteur (13₁, 13ₙ) devant justement être relié avec le dispositif électronique d'évaluation (23), et
--- un multiplexeur digital (78) destiné à la connexion des données de calibrage et des données d'ajustage du vint zéro du capteur (13₁, 13ₙ) devant justement être relié avec le dispositif électronique d'évaluation (23).

4. Débitmètre électromagnétique
- avec plusieurs capteurs électromagnétiques (14₁, 14ₙ), dont chacun comprend
-- un tube de mesure (2) traversé par un fluide (1) électroconducteur devant être mesuré, non-ferromagnétique et isolé contre le courant électrique du fluide,
-- un agencement de bobines (3) destiné à produire un champ magnétique traversant le tube de mesure (2) diamétralement et perpendiculairement à l'axe longitudinal du tube de mesure, et
-- des électrodes, dont
--- soit deux électrodes de mesurage (4), disposées diamétralement dans ou sur la paroi du tube de mesure et dont la ligne de jonction est perpendiculaire à la direction du champ magnétique, servent à réduire les potentiels induits par le champ magnétique,
--- soit deux électrodes de mesurage (4), disposées diamétralement dans ou sur la paroi du tube de mesure et dont la ligne de jonction est perpendiculaire à la direction du champ magnétique, servent à réduire les potentiels induits par le champ magnétique, ainsi qu'au moins une électrode supplémentaire disposée dans la paroi du tube de mesure (2) et servant d'électrode au point zéro de commutation (5) du fluide (1), et
-- une unité de traitement (34₁, 34ₙ) pour les potentiels,
- avec un seul dispositif électronique d'évaluation (24), lequel contient
-- une unité de traitement supplémentaire (29) pour le signal de sortie du l'unité de traitement (34₁, 34ₙ),
-- un dispositif digital de calibrage et de compensation du point zéro (39) raccordé à l'unité de traitement
--- grâce auquel des données digitales de calibrage et d'ajustage du point zéro du capteur (14₁, 14ₙ) sont formées au cours d'une phase de calibrage et d'ajustage du point zéro,
-- une unité de stockage électronique (44) pour les données de calibrage et d'ajustage du point zéro de tous les capteurs (14₁, 14ₙ),
--- dont les données relatives aux capteurs (14₁, 14ₙ) devant justement être mesurés sont triées lors du mesurage à partir de l'unité de stockage (44) sur l'unité de traitement supplémentaire (29), et
-- une commutation de générateur (50) destinée à produire le flux magnétique, et
- avec un système de commutation (64) destiné à la ligne individuelle temporaire successive de chacun des capteurs (14₁, 14ₙ) , lesquels comprennent
-- une alimentation continue en courant (69) de l'unité de traitement respective (34) de chacun des capteurs (14₁, 14ₙ)
-- chacun des capteurs présentant :
--- un thyristor (6₁, 6ₙ) à commande optique et auto-extincteur dans le passage de flux nul, dont la voie du courant principale est disposée dans une des conduites de bobine adjointes au thyristor, et
--- un multiplexeur analogique (74) comprenant autant de voies du courant doubles (80₁-80, 80ₙ-80), que de capteurs (14₁, 14ₙ) prévus,
---- lesdites voies du courant doubles connectant soit le signal de sortie de l'unité de traitement (34₁, 34ₙ), soit le signal de sortie de l'unité de traitement (34₁, 34ₙ) et l'électrode au point zéro de commutation du capteur (14₁, 14ₙ) devant justement être relié avec le dispositif électronique d'évaluation (24).

5. Dispositif de commutation selon l'une ou l'autre des revendications 1 à 4, comprenant un multiplexeur analogique (70) présentant autant de voies de courant supplémentaires (85₁-85, 85ₙ-85) pour chaque capteur (11₁', 11ₙ'), que d'électrodes supplémentaires pour chaque capteur disposées dans la paroi du tube de mesure respectif (2) et qui servent d'électrodes de contrôle du fluide (7), ladite ou lesdites voie(s) de courant supplémentaire(s) (85) connectant la ou les électrode(s) de contrôle du fluide (7) du capteur devant être relié au dispositif électronique d'évaluation (21').

6. Dispositif de commutation selon l'une ou l'autre des revendications 2 à 4, comprenant un multiplexeur analogique (74') dont chaque capteur (14₁', 14ₙ') est composé d'une voie de courant supplémentaire (89₁-89, 89ₙ-89), par l'intermédiaire de laquelle est connecté un signal de contrôle du fluide émis par l'unité de traitement (34'), ce signal produisant l'unité de traitement (34') à partir d'un signal transmis à cette unité par au moins une électrode supplémentaire servant d'électrode de contrôle de fluide (7), l'électrode supplémentaire étant disposée dans la paroi du capteur respectif (14₁', 14ₙ').
